# EUROPÄISCHE PATENTSCHRIFT

(11) **EP 3 888 152 B1**
(45) Veröffentlichungstag und Bekanntmachung des Hinweises auf die Patenterteilung: **01.10.2025**
(21) Anmeldenummer: 19808747.0
(22) Anmeldetag: 20.11.2019
(51) Int. Cl.: H01M 50/528, H01M 10/0585, H01M 10/04, H01M 50/51, H01M 10/0525, H01M 10/0587, H01M 50/26, H01M 12/06, H01M 50/258, H01M 50/211, H01M 50/50

(54) **BATTERIEZELLE, BATTERIEMODUL UND DESSEN VERWENDUNG**
BATTERY CELL, BATTERY MODULE AND USE THEREOF
ELÉMENT DE BATTERIE ET SON UTILISATION

(30) Priorität: 29.11.2018 DE 102018220539
(43) Veröffentlichungstag der Anmeldung: 06.10.2021
(73) Patentinhaber: Robert Bosch GmbH, 70442 Stuttgart (DE)
(72) Erfinder: SCHMID, Florian, 70825 Korntal (DE); BAUER, Laura, 96146 Altendorf (DE); THIELEN, Joerg, 56867 Briedel (DE); HOMANN, Jerome, 71272 Renningen (DE); SCOTT, Steve, Fairborn, OH, 45324 (US); SCHNEIDER, Dan, Orion, MI, 48359 (US); SCHUMANN, Bernd, 71277 Rutesheim (DE); DIESSNER, Christian, 75417 Muehlacker-Muehlhausen (DE); NAUGHTON, David, Oxford, MI, 48371 (US); MOSLEY, Gary, Cincinnati, OH, 45241 (US); ANGERBAUER, Ralf, 71696 Moeglingen (DE); SEROUT, Anne, 70193 Stuttgart (DE); KOTIK, Mark, Rochester Hills, MI, 48306 (US)
(86) Internationale Anmeldenummer: PCT/EP2019/081907
(87) Internationale Veröffentlichungsnummer: WO 2020/109102

(56) Entgegenhaltungen:
- EP-A1- 3 376 552
- DE-A1- 102010 038 862
- DE-A1- 102011 076 919

## Beschreibung

Die vorliegende Erfindung bezieht sich auf eine Batteriezelle, ein Batteriemodul und dessen Verwendung gemäß dem Oberbegriff der unabhängigen Patentansprüche.

### Stand der Technik

Als elementare Einheiten in Batterien setzen sich Batteriezellen aus einer Vielzahl von Elektrodeneinheiten zusammen, die in Form von Elektrodenstapeln oder Elektrodenwickeln vorliegen. Dabei umfasst ein Elektrodenstapel zumindest eine positive Elektrode in Form einer positiven Elektrodenfolie, eine negative Elektrode in Form einer negativen Elektrodenfolie und einen dazwischen angeordneten folienartigen Separator. An jeder einzelnen Elektrode ist ein Ableiterfähnchen vorgesehen. Die positiven bzw. negativen Ableiterfähnchen sind getrennt seitlich an den Elektroden gebündelt, die jeweils mit einem positiven bzw. negativen Stromsammler verbunden sind. Unter Ausbildung einer Batteriezelle werden die Elektrodenstapel in ein Gehäuse aufgenommen. Dabei kann das Gehäuse prismatisch, rund oder folienartig ausgeführt sein. Die positiven bzw. negativen Stromsammler sind durch das Gehäuse nach außen ausgestaltet.

Ein Batteriemodul lässt sich aus einer Vielzahl von Batteriezellen ausbilden. Dabei können die Batteriezellen in einer Reihen- oder Parallelschaltung miteinander elektrisch verbunden sein. Die Batteriezellen sind jeweils in einem Gehäuse umschlossen.

Aus der US2017/0084963 A1 ist ein Batteriemodul bekannt, bei dem ein Stapel von Batteriezellen vorgesehen ist. Dabei sind die Batteriezellen in einer Reihenschaltung elektrisch miteinander verbunden. Die Batteriezellen umfassen jeweils ein positives und negatives Ableiterfähnchen, die an zwei gegenüberliegenden Gehäuseseiten der Batteriezellen angeordnet sind. EP3376552A1 offenbart prismatische Lithiumionenbatteriezellen mit einer rechteckigen Grundfläche, Pouch-Zellen, sowie Nussschalen-Zellen, bei denen zwei voneinander elektrisch isolierte Gehäusehälften als Anode bzw. Kathode der Batteriezelle fungieren. Im Inneren des Zellgehäuses sind einzelne Lagen aus Anoden- und Kathodenfolien und Festkörperelektrolyt übereinander gestapelt. Eine Mehrzahl von Batteriezellen bildet dabei ein Batteriemodul für die Verwendung in Fahrzeugen. Die erste Gehäusehälfte kontaktiert die mindesten einen Anode der Batteriezelle und die zweite Gehäusehälfte die mindestens einen Kathode der Batteriezelle. Dabei sind die mindestens eine Anode und die mindestens eine Kathode parallel zu einer Boden- und einer Deckelfläche der Batteriezelle ausgerichtet. Die Kontaktierung der Batteriezellen des Batteriemoduls erfolgt im Bereich der Bodenfläche und im Bereich der Deckelfläche des Batteriemoduls.

### Offenbarung der Erfindung

Erfindungsgemäß wird eine Batteriezelle gemäß dem unabhängigen Anspruch 1 bereitgestellt, die eine Vielzahl von übereinander positionierten Elektrodenstapeln beinhaltet. Ein Elektrodenstapel weist eine positive Elektrode, eine negative Elektrode und einen dazwischen angeordneten Separator. Eine Vielzahl von Elektrodenstapeln setzt sich zusammen aus übereinander angeordneten einzelnen Elektrodenstapeln. Dabei weisen die Elektrodenstapel eine gleiche Abfolge einer positiven Elektrode, eines Separators und einer negativen Elektrode auf. Dabei ist ein positiver Stromsammler auf einer ersten Elektrode in Form einer ersten Großfläche fixiert. Zusätzlich ist ein negativer Stromsammler auf einer zweiten Elektrode in Form einer zweiten Großfläche fixiert.

Dabei ist vorteilhaft, dass die erfindungsgemäße Batteriezelle durch eine Reihenschaltung der Elektrodenstapel eine erhöhte Zellspannung aufweist.

Darüber hinaus wird ein elektrischer Strom in der Batteriezelle durch den ersten bzw. zweiten Stromsammler homogen abgeleitet.

Weitere vorteilhafte Ausführungsformen der vorliegenden Erfindung sind Gegenstand der Unteransprüche.

So ist es von Vorteil, wenn die vier angrenzenden Seitenflächen der Elektrodenstapel in ein Gehäuse aufgenommen sind. Dabei ist das Gehäuse vorzugsweise folienartig ausgeführt. Dadurch werden die Elektrodenstapel vor einem Eindringen der Umgebungsmedien, beispielsweise Feuchtigkeit oder Luft, abgedichtet.

Gemäß dem unabhängigen Anspruch 1 weist der positive Stromsammler eine größere Schichtdicke als die positive Elektrode auf und der negative Stromsammler eine größere Schichtdicke als die negative Elektrode. Damit wird ein geringerer elektrischer Widerstand in der Batteriezelle gewährleistet.

Des Weiteren ist es von Vorteil, wenn eine erste Zwischenschicht zwischen dem positiven Stromsammler und der ersten Großfläche angeordnet ist. Zusätzlich ist es von Vorteil, wenn eine zweite Zwischenschicht zwischen dem negativen Stromsammler und der zweiten Großfläche angeordnet ist.

Es ist vorteilhaft, wenn die erste Zwischenschicht einen elektrisch leitfähigen Klebstoff aufweist. Zusätzlich ist es vorteilhaft, wenn die zweite Zwischenschicht einen elektrisch leitfähigen Klebstoff aufweist. Vorzugsweise enthält der elektrisch leitfähige Klebstoff einen silber- oder kohlenstoffbasierenden Epoxidharzkleber. Mittels einer Haftkraft des elektrisch leitfähigen Klebstoffes ist das Gehäuse versiegelt. Des Weiteren wird eine Reibung zwischen dem positiven Stromsammler und der ersten Großfläche sowie zwischen dem negativen Stromsammler und der zweiten Großfläche vermieden, die zu einer Korrosion führt.

Die erfindungsgemäße Batteriezelle lässt sich vorteilhaft für ein erfindungsgemäßes Batteriemodul einsetzen, das zumindest zwei derartige Batteriezellen beinhaltet. Dabei ist eine erste Batteriezelle auf einer zweiten Batteriezelle derart aufgebracht, dass ein erster positiver Stromsammler der ersten Batteriezelle mit einem zweiten negativen Stromsammler der zweiten Batteriezelle elektrisch verbunden ist. Alternativ ist die erste Batteriezelle auf der zweiten Batteriezelle derart aufgebracht, dass ein erster negativer Stromsammler der ersten Batteriezelle mit einem zweiten positiven Stromsammler der zweiten Batteriezelle elektrisch verbunden ist.

Des Weiteren ist es von Vorteil, wenn der erste positive Stromsammler auf dem zweiten negativen Stromsammler vollflächig aufeinander vorzugsweise mittels Pressen fixiert ist und wenn der erste negative Stromsammler auf dem zweiten positiven Stromsammler vollflächig aufeinander vorzugsweise mittels Pressen fixiert ist.

Das erfindungsgemäße Batteriemodul lässt sich vorteilhaft in lithiumhaltigen Batteriesystemen wie Lithium-Ionen-Batterien, lithiumhaltigen Solid-State-Batterien, Lithium-Schwefel- oder Lithium-Luft-Batterien einsetzen. Diese können Anwendung in elektrischen Fahrzeugen, in Hybridfahrzeugen, oder in stationären Anwendungen wie beispielsweise zur Speicherung regenerativ gewonnener Energie finden.

### Kurze Beschreibung der Figuren

In der Zeichnung sind vorteilhafte Ausführungsformen der vorliegenden Erfindung dargestellt und in der nachfolgenden Figurenbeschreibung näher erläutert. Es zeigt:
- Figur 1:: eine Schnittansicht einer erfindungsgemäßen Batteriezelle,
- Figur 2:: eine Seitenansicht eines erfindungsgemäßen Batteriemoduls.

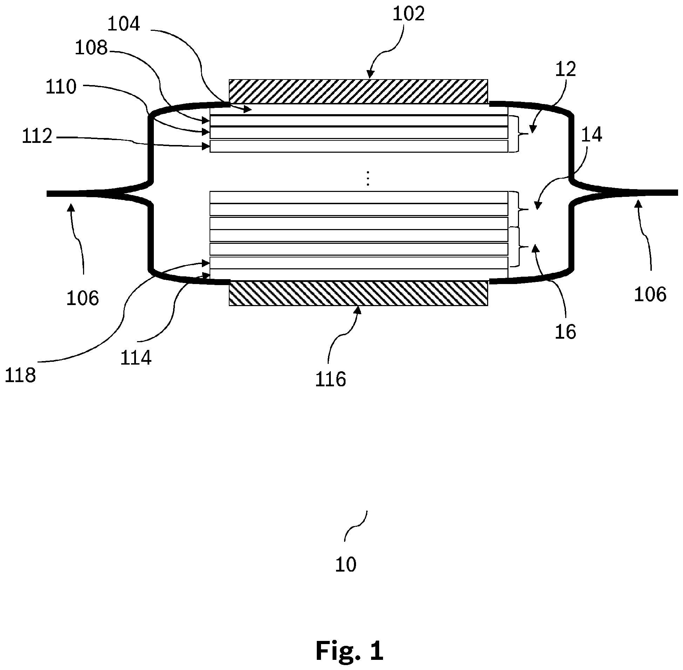

In Figur 1 ist eine Schnittansicht einer erfindungsgemäßen Batteriezelle 10 dargestellt. Die Batteriezelle 10 setzt sich aus mehreren Elektrodenstapeln 12, 14, 16 zusammen. Die Elektrodenstapel 12, 14, 16 beinhalten eine gleiche Abfolge einer positiven Elektrode 108, einer negativen Elektrode 112 und eines dazwischen angeordneten Separators 110. Dabei weist der Separator 110 beispielsweise einen Festkörperelektrolyten aus Polymer auf. Die Elektrodenstapel 12, 14, 16 sind in ein Gehäuse 106 aufgenommen. Dabei schützt das Gehäuse 106 die Elektrodenstapel 12, 14, 16 vor Korrosion, Gasen oder Feuchtigkeit in der Umgebung. Ein positiver Stromsammler 102 ist mittels einer ersten Zwischenschicht 104 auf der ersten positiven Elektrode 108 fixiert. Zugleich ist ein negativer Stromsammler 116 mittels einer zweiten Zwischenschicht 114 auf einer negativen Elektrode des Elektrodenstapels 16 fixiert. Dabei umfasst die erste bzw. zweite Zwischenschicht 104, 114 einen elektrisch leitfähigen Klebstoff. Der elektrisch leitfähige Klebstoff kann beispielsweise ein silber- oder kohlenstoffbasierter Epoxidharzkleber sein. Die positive bzw. negative Elektrode 108, 112 und der Separator 110 können beispielsweise mit einer Schichtdicke im Bereich von 10 µm bis 200 µm ausgeführt werden, um eine hohe volumetrische bzw. gravimetrische Energiedichte aufweisend beispielsweise 1300 Wh/I bzw. 550 Wh/kg in der Batteriezelle 10 zu erreichen. Um einen geringeren elektrischen Widerstand in der Batteriezelle 10 zu erzielen, können der positive und negative Stromsammler mit einer Schichtdicke von 100 µm bis 5 mm ausgeführt sein.

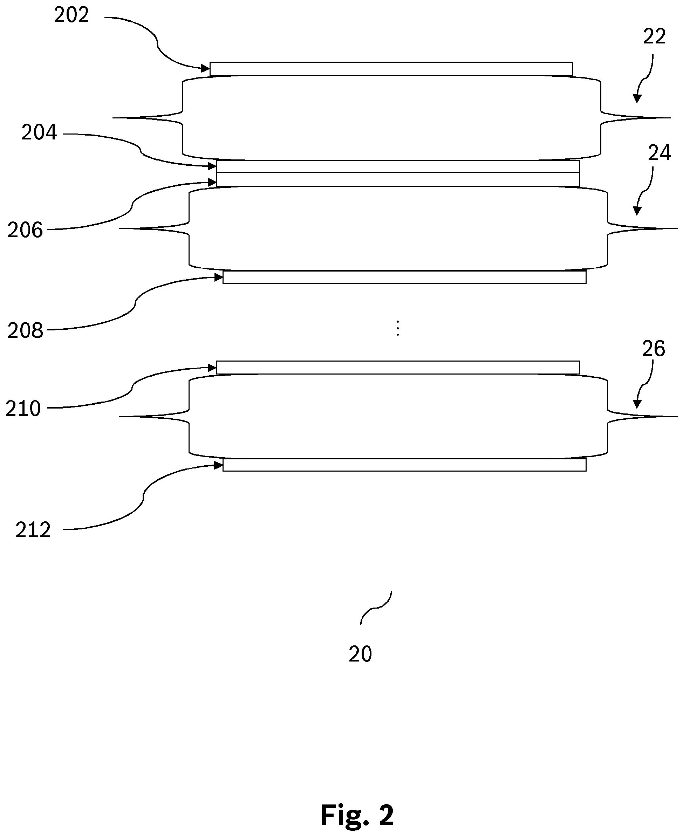

Eine derartige Batteriezelle 10 lässt sich vorteilhaft für ein erfindungsgemäßes Batteriemodul 20 einsetzen, dessen Seitenansicht in Figur 2 dargestellt ist. Dabei umfasst das Batteriemodul 20 eine Mehrzahl von Batteriezellen 22, 24, 26, die jeweils durch ein Gehäuse ausgebildet sind. Die Batteriezellen 22, 24, 26 enthalten jeweils einen positiven und negativen Stromsammler. Ein erster negativer Stromsammler 202 ist auf einer ersten Batteriezelle 22 angeordnet. Eine n-te Batteriezelle 26 enthält einen n-ten negativen Stromsammler 210 und einen n-ten positiven Stromsammler 212. Ein erster positiver Stromsammler 204 ist mit einem zweiten negativen Stromsammler 206 einer zweiten Batteriezelle 24 verbunden. Dadurch sind die erste und zweite Batteriezelle 22, 24 in einer Reihenschaltung verbunden. Ferner ist die erste Batteriezelle 22 auf die zweite Batteriezelle angepresst. Damit sind keine zusätzlichen Verbindungsprozesse oder Verbindungsbauteile nötig.

Das beschriebene Batteriemodul eignet sich zur Verwendung in lithiumhaltigen Batteriesystemen, wie beispielsweise Lithium-Ionen-Batterien, lithiumhaltigen Solid-State-Batterien, Lithium-Schwefel- oder Lithium-Luft-Batterien sowie in Brennstoffzellen. Diese wiederum finden Anwendung in E-Bikes oder Kraftfahrzeugen sowie in der stationären Speicherung elektrischer Energie.

## Patentansprüche

1. Batteriezelle mit einer Vielzahl von übereinander positionierten Elektrodenstapeln (12, 14, 16), die eine gleiche Abfolge einer positiven Elektrode (108), eines Separators (110) und einer negativen Elektrode (112) aufweisen,
wobei
ein positiver (102) bzw. negativer (116) Stromsammler auf einer ersten bzw. zweiten Großfläche (108, 118), aufweisend eine positive bzw. negative Elektrode der übereinander positionierten Elektrodenstapel fixiert ist,
**dadurch gekennzeichnet, dass**
der positive bzw. negative Stromsammler (102, 116) eine größere Schichtdicke als die positive bzw. negative Elektrode (108, 118) aufweist.

2. Batteriezelle nach Anspruch 1,
**dadurch gekennzeichnet, dass**
vier aneinandergrenzende Seitenfläche der Elektrodenstapel in ein insbesondere folienartiges Gehäuse (106) aufgenommen sind.

3. Batteriezelle nach einem der Ansprüche 1 bis 2,
**dadurch gekennzeichnet, dass**
zwischen dem positiven Stromsammler (102) und der ersten Großfläche (108) eine erste Zwischenschicht (104) angeordnet ist
und/oder
zwischen dem negativen Stromsammler (116) und der zweiten Großfläche (118) eine zweite Zwischenschicht (114) angeordnet ist.

4. Batteriezelle nach Anspruch 3,
**dadurch gekennzeichnet, dass**
die erste bzw. zweite Zwischenschicht (104, 114) einen elektrisch leitfähigen Klebstoff, insbesondere einen silber- oder kohlenstoffbasierten Epoxidharzkleber, aufweist.

5. Batteriemodul mit zumindest zwei Batteriezellen nach einem der Ansprüche 1 bis 4, **dadurch gekennzeichnet, dass**
eine erste Batteriezelle (22) auf eine zweite Batteriezelle (24) derart angeordnet ist,
dass ein erster positiver Stromsammler (204) der ersten Batteriezelle (22) mit einem zweiten negativen Stromsammler (206) der zweiten Batteriezelle (24) elektrisch verbunden ist
oder
dass ein erster negativer Stromsammler (202) der ersten Batteriezelle (22) mit einem zweiten positiven Stromsammler (208) der zweiten Batteriezelle (24) elektrisch verbunden ist.

6. Batteriemodul nach Anspruch 5,
**dadurch gekennzeichnet, dass**
der erste positive Stromsammler (204) mit dem zweiten negativen Stromsammler (206) sowie der erste negative Stromsammler (202) mit dem zweiten positiven Stromsammler (208) vollflächig aufeinander fixiert ist, insbesondere verpresst ist.

7. Verwendung eines Batteriemoduls nach einem der Ansprüche 5 bis 6, in einem Elektrofahrzeug (EV), in einem Hybridfahrzeug (HEV) oder in einem Plug-In-Hybridfahrzeug (PHEV).

## Claims

1. Battery cell having a plurality of electrode stacks (12, 14, 16) which are positioned one above the other and have an identical sequence of a positive electrode (108), a separator (110) and a negative electrode (112),
wherein
a positive (102) and negative (116) current collector, respectively, is fixed on a first and second large surface (108, 118), respectively, having a positive and negative electrode, respectively, of the electrode stacks which are positioned one above the other,
**characterized in that**
the positive and negative current collector (102, 116), respectively, have a greater layer thickness than the positive and negative electrode (108, 118), respectively.

2. Battery cell according to Claim 1,
**characterized in that**
four adjoining side faces of the electrode stacks are accommodated in an, in particular film-like, housing (106).

3. Battery cell according to one of Claims 1 to 2,
**characterized in that**
a first intermediate layer (104) is arranged between the positive current collector (102) and the first large area (108)
and/or
a second intermediate layer (114) is arranged between the negative current collector (116) and the second large area (118).

4. Battery cell according to Claim 3,
**characterized in that**
the first and second intermediate layer (104, 114), respectively, have an electrically conductive adhesive, in particular a silver-based or carbon-based epoxy resin adhesive.

5. Battery module having at least two battery cells according to one of Claims 1 to 4,
**characterized in that**
a first battery cell (22) is arranged on a second battery cell (24) such that a first positive current collector (204) of the first battery cell (22) is electrically connected to a second negative current collector (206) of the second battery cell (24)
or
a first negative current collector (202) of the first battery cell (22) is electrically connected to a second positive current collector (208) of the second battery cell (24).

6. Battery module according to Claim 5,
**characterized in that**
the first positive current collector (204) is fixed, in particular pressed, to the second negative current collector (206) and the first negative current collector (202) is fixed, in particular pressed, to the second positive current collector (208) over the full area.

7. Use of a battery module according to one of Claims 5 to 6 in an electric vehicle (EV), in a hybrid vehicle (HEV), in a plug-in hybrid vehicle (PHEV).

## Revendications

1. Élément de batterie comprenant une pluralité d'empilements d'électrodes (12, 14, 16) superposées qui présentent la même séquence d'une électrode positive (108), d'un séparateur (110) et d'une électrode négative (112),
dans lequel
un accumulateur positif (102) et un accumulateur négatif (116) sont respectivement fixés sur des première et seconde grandes surfaces (108, 118), présentant respectivement des électrodes positive et négative des empilements d'électrodes superposées,
**caractérisé en ce que**
l'accumulateur positif (102) et l'accumulateur négatif (116) présentent respectivement une épaisseur de couche supérieure à celle des électrodes positive (108) et négative (118) respectivement.

2. Élément de batterie selon la revendication 1,
**caractérisé en ce que**
quatre surfaces latérales adjacentes des empilements d'électrodes sont reçues dans un boîtier, notamment de type film (106).

3. Élément de batterie selon l'une des revendications 1 à 2,
**caractérisé**
**en ce qu'**une première couche intermédiaire (104) est agencée entre l'accumulateur positif (102) et la première grande surface (108)
et/ou
**en ce qu'**une seconde couche intermédiaire (114) est agencée entre l'accumulateur négatif (116) et la seconde grande surface (118).

4. Élément de batterie selon la revendication 3,
**caractérisé en ce que**
les première et seconde couches intermédiaires (104, 114) présentent respectivement une colle électroconductrice, notamment une colle de résine époxy à base d'argent ou de carbone.

5. Module de batterie comprenant au moins deux éléments de batterie selon l'une quelconque des revendications 1 à 4,
**caractérisé**
**en ce qu'**un premier élément de batterie (22) est agencé sur un second élément de batterie (24) de telle sorte qu'un premier accumulateur positif (204) du premier élément de batterie (22) soit électriquement relié à un second accumulateur négatif (206) du second élément de batterie (24)
ou
**en ce qu'**un premier accumulateur négatif (202) du premier élément de batterie (22) est électriquement relié à un second accumulateur positif (208) du second élément de batterie (24).

6. Module de batterie selon la revendication 5,
**caractérisé en ce que**
le premier accumulateur positif (204) est fixé sur le second accumulateur négatif (206) et le premier accumulateur négatif (202) est fixé sur le second accumulateur positif (208), sur toute leur surface, notamment par pression.

7. Utilisation d'un module de batterie selon l'une quelconque des revendications 5 à 6 dans un véhicule électrique (EV), dans un véhicule hybride (HEV) ou dans un véhicule hybride rechargeable (PHEV).
